# EUROPÄISCHE PATENTSCHRIFT

(11) **EP 1 778 018 B1**
(45) Veröffentlichungstag und Bekanntmachung des Hinweises auf die Patenterteilung: **22.12.2010**
(21) Anmeldenummer: 05757354.5
(22) Anmeldetag: 08.07.2005
(51) Int. Cl.: A23F 3/38, A23F 3/36

(54) **VERFAHREN ZUR ENTCOFFEINIERUNG VON TEE**
METHOD FOR DECAFFINATING TEA
PROCEDE POUR DECAFFEINER DU THE

(30) Priorität: 09.07.2004 DE 102004033382
(43) Veröffentlichungstag der Anmeldung: 02.05.2007
(73) Patentinhaber: NATECO2 GmbH & Co. KG, 85283 Wolnzach (DE)
(72) Erfinder: GEHRIG, Manfred, 85283 Wolnzach (DE); GEYER, Stefan, 85283 Wolnzach (DE); SCHULMEYR, Josef, 85283 Wolnzach (DE); FORCHHAMMER, Birgit, 93333 Neustadt (DE); SIMON, Karin, 85276 Pfaffenhofen (DE)
(74) Vertreter: Wager, Peter
(86) Internationale Anmeldenummer: PCT/EP2005/007407
(87) Internationale Veröffentlichungsnummer: WO 2006/005537

(56) Entgegenhaltungen:
- DE-A1- 3 443 390
- DE-A1- 3 838 952
- DE-A1- 4 400 096
- DE-A1- 19 524 481
- US-A- 5 932 101

## Beschreibung

Die Erfindung betrifft ein Verfahren zur Entcoffeinierung von Tee sowie nach diesem Verfahren hergestellten entcoffeinierten Tee.

Aufgüsse aus Kaffee und Tee sind wegen ihrer geschmacklichen und anregenden Eigenschaften weit verbreitete und beliebte Getränke. Für Konsumenten, die aus gesundheitlichen oder sonstigen Gründen den Genuss von Coffein vermeiden möchten, sind seit geraumer Zeit entcoffeinierter Kaffee und Tee verfügbar.

Die Entcoffeinierung wird durch Extraktion mit Hilfe eines Lösungsmittels durchgeführt, wobei für die Herstellung coffeinfreien Kaffees (Coffea-Arten) die grünen Bohnen extrahiert werden. Da erst bei der anschließenden Röstung die relevanten Aromastoffe entstehen, ist der Extraktionsschritt weniger kritisch für die Qualität des Endproduktes. Andere Gegebenheiten herrschen bei Tee (Camellia sinensis). Im allgemeinen wird Tee in seiner Endform, d.h. gedämpft oder geröstet als Grüner Tee oder fermentiert als Schwarzer Tee, zur Entcoffeinierung eingesetzt, weswegen der Extraktionsschritt kritisch für die Qualität des Endproduktes ist. Erfolgt nämlich die Extraktion zu wenig selektiv, verliert der Tee viele Geschmacks- und Geruchsstoffe und damit an Genusswert.

Als Entcoffeinierungsmittel für Tee wird heute überwiegend Kohlendioxid im überkritischen Zustand verwendet, das je nach den angewendeten Extraktionsparametern verhältnismäßig selektive Extraktionseigenschaften besitzt. Trotzdem befand man es zunächst für notwendig, in einem Dreistufenprozess (DE 2 127 642*, Studiengesellschaft Kohle*) zuerst Aromastoffe mit trockenem Kohlendioxid zu extrahieren, anschließend mit feuchtem CO₂ das Coffein zu entfernen und schließlich das extrahierte Aroma wieder auf den Tee aufzuimprägnieren. Die Entcoffeinierung wurde bei 20 - 25 MPa vorgenommen. Diese aufwendige Verfahrensweise hat sich nicht durchsetzen können, weil durch die notwendigen mehrfachen Behandlungsschritte das sehr empfindliche Teearoma leidet, so dass das Ergebnis nicht besser ist als bei einem einfachen Extraktionsschritt. Ebenfalls mehrstufig arbeitet das Verfahren nach DE 2 637 197 *(HAG AG),* das eine selektive Abscheidung des extrahierten Coffeins an Ionenaustauschern ohne vorherige Druckabsenkung vorsieht. Der Druck beträgt vorzugsweise 10 - 30 MPa.

Später ist es mit einstufigen Extraktionsverfahren gelungen, entcoffeinierten Tee von zufriedenstellender Qualität herzustellen. So ist aus DE 34 15 844 *(SKW Trostberg AG)* ein Verfahren bekannt, bei dem die Extraktion bei 26 bis 35 MPa und 50 - 70°C mit überkritischem Kohlendioxid vorgenommen und das extrahierte Coffein an Aktivkohle gebunden wird. Gemäß DE 34 13 869 *(Hopfenextraktion HVG Barth)* verwendet man CO₂ in flüssigem Zustand, also unterhalb seiner kritischen Temperatur aber oberhalb seines Dampfdrucks bei einem Druck bis 40 MPa.

In weiteren Entcoffeinierungsverfahren für Tee wird das Problem des Aromaerhalts aufgegriffen. So sind aus DE 3 640 333 und DE 3 817 736 *(Hopfenextraktion HVG Barth)* zweistufige Extraktionsverfahren bekannt, bei denen der Aromaentzug bei milderen Bedingungen erfolgt als die anschließende Entcoffeinierung, die bei 15 - 40 MPa vorgenommen wird (15 - 50 MPa im Text der US 4 938 977). Einen anderen Weg verfolgt man gemäß DE 4 400 096*, (Hopfenextraktion HVG Barth):* In einem einstufigen Prozess wird das Coffein selektiv durch einen Waschprozess, der mit Wasser durchgeführt wird, aus dem zirkulierenden Kohlendioxid des Extraktionskreislaufs entfernt.

Neben dem Geschmacksproblem standen wirtschaftliche Erwägungen im Vordergrund der Entwicklung des Standes der Technik. Zur Entcoffeinierung sind erhebliche Mengen Kohlendioxid, bezogen auf den eingesetzten Tee, erforderlich, deren Bereitstellung große Pumpen, lange Extraktionszeiten und einen hohen Energieaufwand erforderlich macht, insbesondere, wenn die Abscheidung des Coffeins durch Druckabsenkung erfolgt. Lange Extraktionszeiten werden deshalb erforderlich, weil die Teeblätter bzw. die kleinen Teepartikeln in feuchter Form keine beliebig hohen Strömungsgeschwindigkeiten während der Extraktion zulassen. Da das Coffein an Stoffe wie Polyphenole komplex gebunden ist, werden für diese Komplexe während der Entcoffeinierung nur etwa 10 - 20 % der Löslichkeit des freien Coffeins erreicht, so dass zur vollständigen Entcoffeinierung von Tee CO₂-Mengen in der Größenordnung von 200 - 300 kg/kg Tee durch das Extraktionsgut zu leiten sind.

Daher hat es Bestrebungen gegeben, die erforderlichen Gasmengen durch Erhöhung der Coffein-Löslichkeit zu reduzieren, indem dem Kohlendioxid sogenannte Schleppmittel (Modifier) zugesetzt werden. Beispiele für solche Verfahren sind aus US 4 255 458 *(HAG* AG) und JP A 01 289 448 *(Ube Ind Ltd)* bekannt. Solchen Verfahren ist gemeinsam, dass die Durchführung des Verfahrens zwar mit kleineren CO₂-Mengen möglich ist, dadurch aber erhöhte Verluste an wertgebenden Aromastoffen entstehen, was den solcherart entcoffeinierten Tee qualitativ unterlegen macht. Die wirtschaftlichen Vorteile dieser Verfahren werden im übrigen durch die notwendige Beschaffung und Wiederaufbereitung des Modifiers kompensiert.

Nach dem Stand der Technik verläuft die Tee-Entcoffeinierung mit Kohlendioxid bei einem Druck von 20 - 40 MPa, wobei Qualitätserwägungen die angewendete Temperatur in der Weise bestimmen, dass eine höhere Temperatur zwar in manchen Fällen eine wirtschaftlich günstigere Entcoffeinierung erlaubt, aber von qualitativen Nachteilen begleitet wird.

Entcoffeinierung von Tee bei einem Druck bis 50 MPa ist weiterhin aus DE 38 38 952 und DE 3 443 390 bekannt.

Gegen die Anwendung höherer Drücke bestand ein Vorurteil in der Weise, dass auf der einen Seite keine wesentliche Beschleunigung des Extraktionsvorganges gesehen wurde, auf der anderen Seite zu befürchten war, dass die empfindlichen Aromastoffe durch die Anwendung höherer Drücke geschädigt oder zumindest verstärkt extrahiert werden und damit verlorengehen. In DE 3 413 869 wird zusätzlich ausgeführt, dass "eine aus apparativen (und damit wirtschaftlichen) Gründen obere Grenze bei 40 MPa" liegt.

Es gilt sogar für die Mehrzahl der technisch mit Kohlendioxid extrahierten Naturstoffe, wenn man die in Ölsaaten enthaltenen Triglyceride ausnimmt, dass die Anwendung von Drücken von bereits über 30 MPa einerseits die Extraktion nur geringfügig beschleunigt, andererseits aber höhere Investitionskosten durch die erforderliche höhere Druckfestigkeit der Apparate, Aggregate und Rohrleitungen sowie höhere Energiekosten auf Grund größerer Druckdifferenzen im Extraktionsbetrieb verursacht. Dagegen ist es bekannt, die Extraktion von Fetten und Ölen bei Drücken oberhalb von 55 MPa vorteilhaft durchzuführen (z.B. US 4 466 923). Nun besteht aber zwischen den Triglyceriden, d.h. Fetten und Ölen, und dem Alkaloid Coffein chemisch keine Verwandtschaft. Ein signifikanter Vorteil eines Entcoffeinierungsprozesses bei einem Druck von über 50 MPa konnte daher nicht erwartet werden, folglich wurden aus diesem Grund offensichtlich auch keine Forschungen in diese Richtung angestellt.

US 5 932 101 erwähnt unter anderem die Extraktion von Coffein mit CO₂ bei bis zu 120 MPa.

Gegenstand der Erfindung ist das im Anspruch 1 angegebene Verfahren. Vorteilhafte Durchführungsformen dieses Verfahrens ergeben sich aus den Unteransprüchen 2 bis

Die vorliegende Erfindung hat ein Entcoffeinierungsverfahren für alle Tee-Arten der Pflanze Camellia sinensis wie Grünen, Oolong- oder Schwarzen Tee zum Gegenstand. Die Extraktion des Coffeins wird mit Kohlendioxid bei einem Extraktionsdruck von 60 bis 100 MPa sowie einer Temperatur von 10 bis 80°C durchgeführt. Es hat sich nämlich überraschenderweise herausgestellt, dass durch Einhalten solcher Bedingungen die CO₂-Menge, bezogen auf die Teemenge, gegenüber dem Stand der Technik mehr als halbiert werden kann, was zu einem erheblichen wirtschaftlichen Vorteil führt, weil der Teedurchsatz einer technischen Anlage damit erheblich erhöht (ggf. mehr als verdoppelt) wird. Der erforderliche Mehraufwand für die Installation von Komponenten, die dem höheren Druck standhalten, wird damit mehr als wettgemacht. Besonders bevorzugt sind Extraktionsbedingungen mit einem Druck bei 70 bis 95 MPa und einer Temperatur von 60 bis 75 °C.

Es hat sich ferner herausgestellt, dass ein Tee, der nach den erfindungsgemäßen Bedingungen entcoffeiniert wird, in seiner sensorischen Qualität einem Tee, der nach den Bedingungen des Standes der Technik entcoffeiniert wurde, gleichzusetzen ist und nach Geschmack, Geruch und Farbe nicht unterschieden werden kann. Die wichtigen polyphenolischen inhaltsstoffe Epigallocatechin-gallat und Epicatechin-gallat werden nämlich überraschenderweise auch bei dem hohen Extraktionsdruck nicht gelöst.

Die Durchführung des erfindungsgemäßen Verfahrens wird wie folgt vorgenommen, wobei dem Fachmann jeweils ein gewisser Spielraum zu Optimierungszwecken überlassen bleibt: der Tee wird vor der Entcoffeinierung mit Wasser auf einen Wassergehalt von 12 bis 50 % befeuchtet und in einen geeigneten Druckbehälter eingefüllt. Dieser wird aus einem Vorratstank und mittels einer Pumpe mit Kohlendioxid in Lebensmittelqualität auf den gewünschten Extraktionsdruck gebracht, und das Kohlendioxid wird kontinuierlich während der notwendigen Extraktionszeit durch den Extraktor geleistet. Für die Entfernung des Coffeins aus dem Kohlendioxid stehen mehrere Möglichkeiten zur Verfügung. Insbesondere kommen zwei Verfahren in Betracht. Bei dem einen wird das Coffein durch eine Druckabsenkung In den niedrigen überkritischen oder unterkritischen Bereich, d. h. auf 15 bis 5 MPa fast vollständig oder vollständig aus dem Kohlendioxid entfernt und letzteres anschließend wieder auf den Extraktionsdruck gebracht. Das zweite Verfahren sieht eine Umwälzung des Kohlendioxids ohne wesentliche Druckabsenkung vor, wobei das Coffein selektiv an ein Adsorbens, wie Aktivkohle, Kieselgel, ein Adsorberharz oder einen Ionenaustauscher mit funktionellen Gruppen, gebunden wird. Während der Extraktion ist es vorteilhaft, den Wassergehalt des Tees auf dem anfangs eingestellten Wert zu halten, wozu eine Wasserzugabe zum Kohlendioxid erforderlich sein kann, bevor es jeweils in den Extraktor eintritt.

Weitere mögliche Verfahren zur Entfernung des Coffeins aus dem Kreislauf sind die Wäsche des Kohlendioxids mit Wasser unter Beibehaltung des Extraktionsdrucks oder die Zurückhaltung des Coffeins an Membranen, die nur für Kohlendioxid permeabel sind.

Nach beendeter Extraktion wird der Druck aus dem Extraktor abgelassen, und der Tee wird entnommen und getrocknet.

Für die technische Konfiguration einer Extraktionsanlage sind die Möglichkeiten des Standes der Technik nutzbar. Eine technische Anlage wird im allgemeinen aus mehreren Extraktoren bestehen, die gleichzeitig oder wechselweise in Reihe oder parallel durchströmt werden, um ein Maximum an Coffein pro Zeiteinheit extrahieren zu können. Derartige Extraktionsanlagen sind dem Fachmann geläufig. Ein Beispiel hierfür ist der Entcoffeinierungszyklus, der mit der dazugehörigen Anlage (neben dem Entaromatisierungszyklus) in der Patentschrift US 4,938,977 beschrieben ist.

### Beispiele

Die unten aufgeführten Teesorten wurden in einer Kleinproduktionsanlage mit einem nutzbaren Extraktionsvolumen von 50 I unter den ebenfalls unten angegebenen Verfahrensparametern mit Kohlendioxid extrahiert. Die Entfernung des Coffeins aus dem Kohlendioxid erfolgte durch Absenkung des Druckes im Abscheidebehälter. Dem im Kreis geführten Kohlendioxid wurde vor dem Eintritt in den Extraktionsbehälter Wasser zugesetzt, um die durch die Löslichkeitsunterschiede im Extraktionsbehälter bzw. im Abscheider bei den verschiedenen Drücken abgetrennte Menge zu ersetzen.

Die Ergebnisse der Entcoffeinierung sind für die folgenden Beispiele und Vergleichsbeispiele tabellarisch zusammengefasst.

### Beispiel 1

Sorte Kenya (Schwarztee), Ausgangscoffeingehalt 3,1 Gew. %

| | Vergleichsbeispiel 1a | Vergleichsbeispiel 1b | Beispiel 1 |
|---|---|---|---|
| Extraktionsdruck, bar | 300 | 300 | 800 |
| Extraktionstemperatur ,°C | 66 | 66 | 66 |
| Feuchtegehalt, Gew. % | 26 | 26 | 26 |
| relative Lösemittelmenge, kg/kg Tee | 260 | 105 | 105 |
| Restcoffeingehalt, Gew. % | 0,22 | 0,58 | 0,15 |

### Beispiel 2

Sorte China-Grün (Grüntee), Ausgangscoffeingehalt 2,9 Gew. %

| | Vergleichsbeispiel 2a | Vergleichsbeispiel 2b | Beispiel 2 |
|---|---|---|---|
| Extraktionsdruck, bar | 300 | 300 | 900 |
| Extraktionstemperatur ,°C | 66 | 66 | 66 |
| Feuchtegehalt, Gew. % | 26 | 26 | 26 |
| relative Lösemittelmenge, kg/kg Tee | 260 | 95 | 95 |
| Restcoffeingehalt, Gew. % | 0,15 | 1,11 | 0,04 |

## Patentansprüche

1. Verfahren zur Entcoffeinierung von Tee der Pflanze Camellia sinensis durch Extraktion mit Kohlendioxid und anschließende Abtrennung des Coffeins aus dem mit ihm beladenen Kohlendioxid, **dadurch gekennzeichnet, dass** die Extraktion bei einem Druck von 60 bis 100 MPa sowie einer Temperatur von 10 bis 80 °C vorgenommen wird.

2. Verfahren nach Anspruch 1, **dadurch gekennzeichnet, dass** die Extraktion bei 70 bis 95 MPa vorgenommen wird.

3. Verfahren nach Anspruch 1, **dadurch gekennzeichnet, dass** der Tee zur Entcoffeinierung auf eine Feuchte von 12 bis 50 % eingesteltt wird.

4. Verfahren nach Anspruch 1, **dadurch gekennzeichnet, dass** das Coffein aus dem Kohlendioxid durch Druckabsenkung auf einen Wert von 15 MPa oder darunter abgetrennt wird.

5. Verfahren nach Anspruch 1, **dadurch gekennzeichnet, dass** das Coffein aus dem Kohlendioxid durch Adsorption abgetrennt wird.

## Claims

1. Process for the decaffeination of tea of the plant Camellia sinensis by extraction with carbon dioxide and subsequent separation of the caffeine from the carbon dioxide charged therewith, **characterized in that** the extraction is carried out at a pressure of from 60 to 100 MPa and a temperature of from 10 to 80 °C.

2. Process according to claim 1, **characterized in that** the extraction is carried out at a pressure of from 70 to 95 MPa.

3. Process according to claim 1, **characterized in that** the tea is adjusted for the decaffeination to a humidity of 12 to 50%.

4. Process according to claim 1, **characterized in that** the caffeine is separated from the carbon dioxide by reducing the pressure to a value of 15 MPa or below.

5. Process according to claim 1, **characterized in that** the caffeine is separated from the carbon dioxide by adsorption.

## Revendications

1. Procédé pour décaféiner du thé de la plante Camellia sinensis par extraction au moyen de dioxyde de carbone et séparation subséquente de la caféine du dioxyde de carbone en chargé, **caractérisé en ce que** l'extraction est exécutée sous une pression de 60 à 100 MPa et à une température de 10 à 80 °C.

2. Procédé selon la revendication 1, **caractérisé en ce que** l'extraction est exécutée sous 70 à 95 MPa.

3. Procédé selon la revendication 1, **caractérisé en ce que**, pour la décaféination, l' humidité du thé est ajustée à une valeur de 12 à 50%.

4. Procédé selon la revendication 1, **caractérisé en ce que** la caféine est séparée du dioxyde de carbone par diminution de la pression à une valeur de 15 MPa ou moins.

5. Procédé selon la revendication 1, **caractérisé en ce que** la caféine est séparée du dioxyde de carbone par adsorption.
